# EUROPEAN PATENT SPECIFICATION

(11) **EP 2 897 395 B1**
(45) Date of publication and mention of the grant of the patent: **21.10.2020**
(21) Application number: 13837474.9
(22) Date of filing: 28.08.2013
(51) Int. Cl.: H04W 8/26, G08B 17/00, G08B 25/10, G08B 25/00, H04W 84/20

(54) **WIRELESS COMMUNICATION SYSTEM**
DRAHTLOSES KOMMUNIKATIONSSYSTEM
SYSTÈME DE COMMUNICATION SANS FIL

(30) Priority: 11.09.2012 JP 2012199891
(43) Date of publication of application: 22.07.2015
(73) Proprietor: Panasonic Intellectual Property Management Co., Ltd., Osaka-shi, Osaka 540-6207 (JP)
(72) Inventor: HOSHIBA, Keitaro, Osaka 540-6207 (JP); KURITA, Masanori, Osaka 540-6207 (JP); ANDO, Shinichiro, Osaka 540-6207 (JP)
(74) Representative: Appelt, Christian W.
(86) International application number: PCT/JP2013/005064
(87) International publication number: WO 2014/041755

(56) References cited:
- EP-A1- 1 223 715
- EP-A1- 2 401 726
- EP-A2- 2 199 997
- WO-A1-2012/108450
- JP-A- 2005 184 480
- JP-A- 2008 004 037
- JP-A- 2008 042 697
- JP-A- 2010 049 625
- JP-A- 2010 049 625
- JP-A- 2011 065 261

## Description

### TECHNICAL FIELD

The invention relates to a wireless communication system in which multiple wireless stations transmit and receive wireless signals by use of radio waves as a medium.

### BACKGROUND ART

A fire alarm system involving coordinated operation of multiple fire alarm devices through wireless signal has been proposed. In a fire alarm system of this kind, multiple fire alarm devices disposed in multiple locations each have a function for detecting the occurrence of a fire and emitting an alarm sound. When any one of the fire alarm devices detects a fire, the fire alarm device emits an alarm sound, as well as transmitting information indicating that a fire has been detected, to the other fire alarm devices by a wireless signal. Consequently, not only the fire alarm device at the origin of the fire but also other fire alarm devices in synchronization with the same emit an alarm sound in unison, thereby providing a rapid and reliable notification of the occurrence of a fire.

Furthermore, a fire alarm system is known in which a particular fire alarm device, of fire alarm devices belonging to a system, is set as a master, the other fire alarm devices are set as slaves, and the devices operate in coordination in relation to a fire by multi-casting of a fire alarm message and/or other messages from the master to the slaves. Such kind of fire alarm system is disclosed in WO2008/088079A, for example.

In fire alarm systems such as the conventional example described above, in order to set any of fire alarm devices as a master and set the others of the fire alarm devices as slaves, it is necessary to operate all of the other fire alarm devices, one by one. Consequently, the work required for registration becomes more complicated, the greater the number of fire alarm devices which are the object of registration, and furthermore, there is a problem in that the time required for registration becomes long.

JP 2010 049625 A describes identification information for identifying an alarm belonging to the same system that is assigned to a master alarm and slave alarms. The master alarm includes a storage part for registering the identification information of the slave alarms, and when receiving a prescribed operation, transmits a registration command signal to the slave alarms, and starts a registration mode for registering the identification information included in a replied response signal into the storage part. At the same time, when receiving the registration command signal, the slave alarms reply the response signal including the identification information assigned to the slave alarms.

EP 2 199 997 A2 describes an alarm system and an alarm device which are capable of enhancing a fail-safe function. A fire alarm device operating as a master unit transmits a switching request signal to fire alarm devices operating as slave units at a predetermined timing, the switching request signal containing at least an own address and an address of a fire alarm device that is to operate as the master unit next. Upon reception of the switching request signal, among the fire alarm devices operating as the slave units, the fire alarm device that is to operate as the master unit next judges whether or not switching is possible based on switching availability judgment information for judging whether or not the switching to the master unit is possible, and, when it is judged that the switching is possible, starts operating as the master unit

### DISCLOSURE OF THE INVENTION

The present invention has been devised in view of the foregoing circumstances, an object thereof being to provide a wireless communication system which can simplify the work required for registration and can shorten the time required for registration. The present invention relates to a wireless station as defined by independent claim 1. Preferred embodiments are described in the dependent claims.

The invention is defined in the appended claims.

The present invention can carry out registration processing for setting a master and slaves, simply by operating a registration switch of any wireless station just once. Therefore, in the wireless communication system according to the present invention, it is possible to simplify the work required for registration, compared to a case where wireless stations are operated one by one, and furthermore, the time required for registration can be shortened.

### BRIEF DESCRIPTION OF THE DRAWINGS

FIG. 1 is an illustrative diagram of a fire alarm device in a wireless communication system relating to an embodiment of the present invention;
FIG. 2 is a diagram showing a flow of registration processing in the wireless communication system relating to the embodiment of the present invention;
FIG. 3 is a time chart of registration processing in the wireless communication system relating to the embodiment of the present invention;
FIG. 4 is a time chart diagram showing the transmission of response messages using time slots in the wireless communication system relating to the embodiment of the present invention;
FIG. 5 is a time chart diagram showing transmission and reception of registration messages and registration response messages in the wireless communication system relating to the embodiment of the present invention; and
FIG. 6 is a diagram showing a flow of re-registration processing in the wireless communication system relating to the embodiment of the present invention.

### DESCRIPTION OF THE EMBODIMENTS

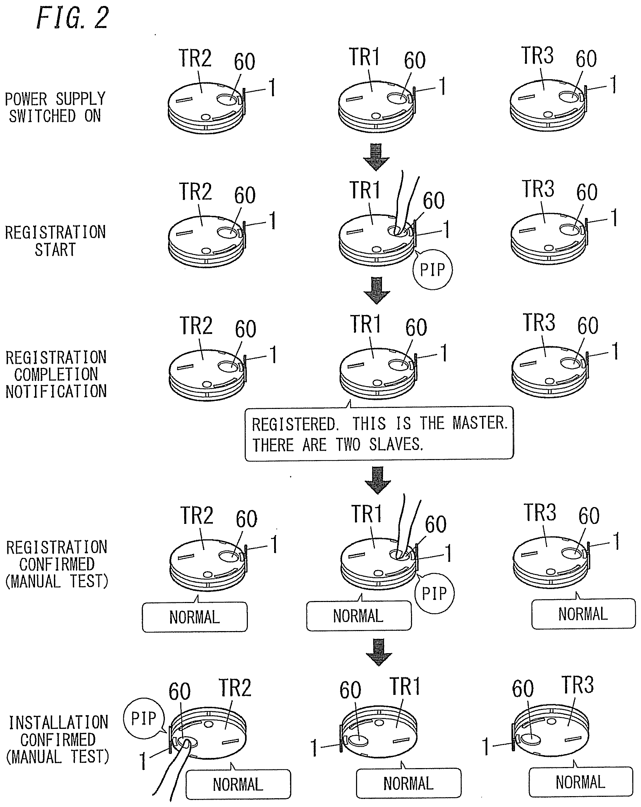

Below, a wireless communication system relating to the embodiment of the present invention (a fire alarm system to which the technical idea of the present invention is applied) is described with reference to the drawings. In the description given below, to refer to common features to individual fire alarm devices **TR1** to **TR3** (to denote not a specific device but an arbitrary device), then the terminology "fire alarm device **TR"** is used. As shown in FIG. 2, the wireless communication system according to the present embodiment includes multiple fire alarm devices **TR1** to **TR3** (in the present embodiment, three fire alarm devices), and wireless signals are transferred (transmitted and received) by radio waves as a medium between the multiple fire alarm devices **TR1** to **TR3.**

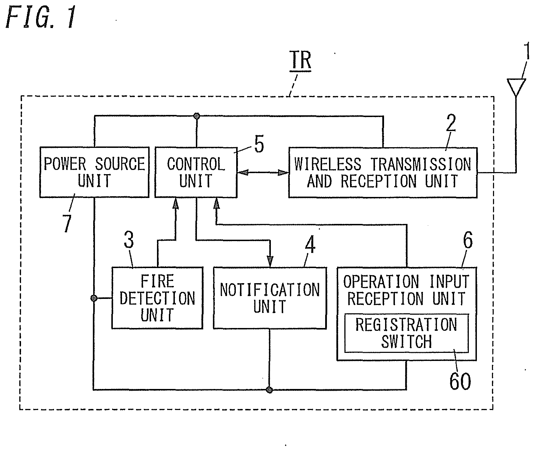

As shown in FIG. 1, the fire alarm device **TR** includes a wireless transmission and reception unit 2 configured to transmit and receive a wireless signal via an antenna 1, a fire detection unit 3 configured to detect a fire, a notification unit 4 configured to emit an alarm sound in the event of an abnormality, such as a fire, and a control unit 5 configured to implement controls of various types. Furthermore, the fire alarm device **TR** includes an operation input reception unit 6 configured to receive operation inputs of various types, and a power source unit 7 configured to supply operating power to each unit by using a battery, such as a dry cell, as a power supply. Unique identification codes are already assigned to the respective fire alarm devices **TR** in the manufacturing stage. Therefore, each fire alarm device **TR** can specify the fire alarm device **TR** that is the addressee of the wireless signal and the fire alarm device **TR** that is the sender of the wireless signal, by the identification codes.

The wireless transmission and reception unit 2 transmits and receives wireless signals by use of radio waves as a medium in compliance with "the radio stations of a low-power security system" defined in Article 6, Section 4, Part 3 of the Ordinance for Enforcement of the Radio Law. Furthermore, the wireless transmission and reception unit 2 outputs a received signal strength indicator signal (RSSI signal) which is a DC voltage signal proportional to the intensity of the received signal. "RSSI" is an abbreviation for "Received Signal Strength Indicator". The fire detection unit 3 detects a fire by detecting smoke, heat, flames, or the like, produced by a fire, for example.

The main constituent element of the control unit 5 is a microcomputer or a rewrite able non-volatile memory (for example, an EEPROM, or the like). "EEPROM" is an abbreviation for "Electrically Erasable Programmable Read-Only Memory". The control unit 5 implements functions of various types by executing a program stored in the memory in a microcomputer. For example, when the occurrence of a fire is detected by the fire detection unit 3, the control unit 5 emits an alarm sound by a buzzer which is provided in the notification unit 4. Alternatively the control unit 5 causes a speaker provided in the notification unit 4 to emit an alarm speech message (such as "Fire! Fire!", etc.) which is previously stored in a memory. In other words, the notification unit 4 reports the occurrence of an event (here, a fire) by speech.

In this case, in order to report the fire alarm by means of the other fire alarm devices **TR**, the control unit 5 transmits a wireless signal including the fire alarm message (called simply "fire alarm message" below), from the wireless transmission and reception unit 2 to a fire alarm device **TR** (first wireless station) set as a master (described later). The control unit 5 of the fire alarm device **TR** set as the master transmits a fire alarm message from the wireless transmission and reception unit 2, to all of fire alarm devices **TR** (second wireless stations) set as slaves (described later). When receiving a fire alarm message, the control unit 5 of each of the fire alarm devices **TR** set as the slaves controls the notification unit 4 and causes an alarm sound or a speech message to be emitted.

The operation input reception unit 6 has multiple switches, such as push buttons, dip switches, or the like, for example. The operation input reception unit 6 receives the operation input corresponding to the respective switch due to operation of a switch, and outputs to the control unit 5 an operation signal corresponding to the operation input. Furthermore, the operation input reception unit 6 is provided with a registration switch 60 which outputs an operation signal causing the control unit 5 to execute the registration processing described below, upon receiving a predetermined operation input, such as a push operation or a slide operation, or the like (here, a push operation).

In the wireless communication system according to the present embodiment, an alarm stop button 60 for stopping the emission of the alarm sound by the notification unit 4 is combined with the registration switch 60. In the stage of the registration processing, since the alarm stop button 60 is not necessary, then it is possible to reduce the number of switches in the operation input reception unit 6 by combining the alarm stop button 60 with the registration switch 60.

Below, the registration processing of the fire alarm devices **TR** in the wireless communication system according to the present embodiment will be described with reference to the drawings. Registration processing means the processing for registering any one of the fire alarm devices **TR** as a master and the others of the fire alarm devices **TR** as slaves. Firstly, as shown in FIG. 2, the power supplies to the fire alarm devices **TR1** to **TR3** are switched on. Thereupon, the control units 5 of the fire alarm devices **TR1** to **TR3** activate the wireless transmission and reception units 2 and switch to a registration reception mode for continuously waiting to receive wireless signals from other fire alarm devices TR.

In the wireless communication system according to the present embodiment, the time period of the registration reception mode is a prescribed time period (for example, 5 minutes) starting from when the power is turned on. By limiting the time period during which registration is possible in this way, it is possible to reduce the possibility of overlapping with the time period during which another group is carrying out registration processing, and to prevent the alarm devices **TR** from being erroneously registered to be in other groups. The time period of the registration reception mode is not limited to the time period indicated above. For example, if the fire alarm device **TR** has a so-called tamper function of monitoring about whether the fire alarm device **TR** is installed on a building surface (the ceiling, or the like), then the time period during which the fire alarm device **TR** is not installed on the building surface may be set as the time period of the registration reception mode.

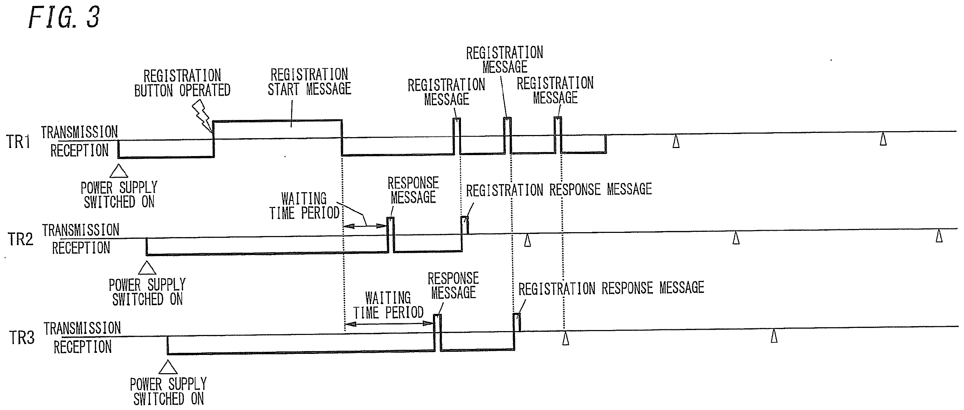

Next, the alarm stop button 60 on any one of the fire alarm devices **TR1** to **TR3** is pressed. In this example, the alarm stop button 60 of the fire alarm device **TR1** (first wireless station) is pressed. In response to this, the control unit 5 of the fire alarm device **TR1** sets the fire alarm device **TR1** including this control unit 5 as the master. Then, as shown in FIG. 3, the control unit 5 of the fire alarm device **TR1** transmits a wireless signal including a registration start message prompting a reply (hereinafter, simply called "registration start message") by broadcasting from the wireless transmission and reception unit 2, continuously for a prescribed period of time. In this case, the control unit 5 of the fire alarm device **TR1** emits a beeping alarm sound by the buzzer of the notification unit 4. When the transmission time period of the registration start message ends, the control unit 5 of the fire alarm device **TR1** activates the wireless transmission and reception unit 2 and switches to a reply waiting mode for waiting for a reply from the other fire alarm devices **TR** for a prescribed period of time.

In this example, the fire alarm devices **TR2**, **TR3** (second wireless stations) are located inside a range reached by the wireless signal transmitted from the fire alarm device **TR1**, and therefore are able to receive the registration start message. Upon receiving the registration start message, the control unit 5 of the fire alarm device **TR2** sets the fire alarm device **TR2** including this control unit 5 as the slave. Then, the control unit 5 of the fire alarm device **TR2** determines a waiting time period on the basis of the identification code thereof, and then waits for the waiting time period to elapse, starting from the end time of the transmission time period of the registration start message. When the waiting time period has elapsed, the control unit 5 of the fire alarm device **TR2** transmits a wireless signal including a response message which indicates that a registration start message has been received (simply called "response message" below), from the wireless transmission and reception unit 2 to the fire alarm device **TR1.** By following a procedure similar to that of the fire alarm device TR2, the fire alarm device **TR3** also sets the fire alarm device **TR3** including this control unit 5 as the slave, and transmits a response message to the fire alarm device **TR1.**

When there is a fire alarm device **TR**, for which the registration processing has already been implemented, then the control unit 5 of that fire alarm device **TR** does not transmit a response message to the fire alarm device **TR1** from the wireless transmission and reception unit 2, even if that control unit 5 receives a registration start message. By this means, it is possible to prevent the fire alarm device **TR**, for which registration processing has already been implemented, from being registered erroneously in another group.

Here, the waiting time period is not limited to the time period described above. For example, if the fire alarm device **TR** has a timer for counting the elapsed time after the power supply has been switched on, then the waiting time period can be determined on the basis of the elapsed time counted by the timer.

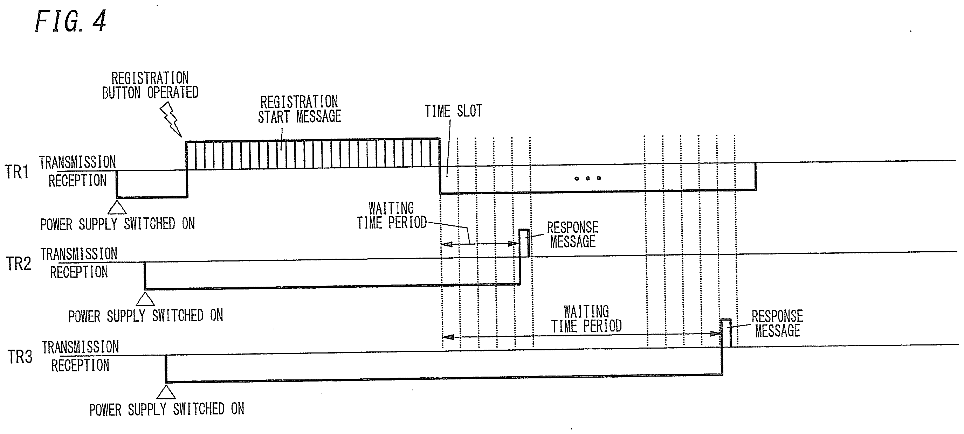

Alternatively, a configuration may be adopted in which the control unit 5 of the fire alarm device **TR1** divides the reception time period into multiple time slots in the reply waiting mode, and the control unit 5 of each fire alarm device **TR2**, **TR3** transmits a response message to the fire alarm device TR1 using any of the time slots. In this configuration, as shown in FIG. 4, the control unit 5 of the fire alarm device **TR1** divides the registration start message into multiple time slots and also divides the reception time period in the reply waiting mode into multiple time slots.

Upon receiving the registration start message, the control unit 5 of each fire alarm device **TR2**, **TR3** can identify the start point of the reception time period from the number of the time slot at the timing the message was received. The control unit 5 of each fire alarm device **TR2**, **TR3** then generates a random number within the range of the number of divisions of the time slots, and transmits a response message during the reception time period, using the time slot of the number determined on the basis of this random number.

By determining the waiting time by using either of the methods described above, it is possible to reduce the probability of a conflict between response messages transmitted to the fire alarm device **TR1** from the fire alarm devices **TR2** and **TR3.**

Furthermore, when the response message is transmitted to the fire alarm device **TR1**, the control unit 5 of each fire alarm device **TR2**, **TR3** may perform a carrier sense operation, and after detecting that there are no conflicting radio waves, may transmit the response message to fire alarm device **TR1.** With this configuration, it is possible to further reduce the probability of conflict between response messages transmitted to the fire alarm device **TR1** from the fire alarm devices **TR2** and **TR3.**

When the reply waiting mode ends, the control unit 5 of the fire alarm device **TR1** stores registration information including the respective identification codes of the fire alarm devices **TR** which have transmitted the response messages and the identification code of the fire alarm device **TR1**, in the memory, and individually assigns slave numbers to the fire alarm devices **TR.** In this example, since the response messages from the fire alarm devices **TR2**, **TR3** are received, then the control unit 5 of the fire alarm device **TR1** assigns, for example, the slave number "1" to the fire alarm device **TR2**, and assigns the slave number "2" to the fire alarm device **TR3.** Since the slave numbers are well-known, they are not described here.

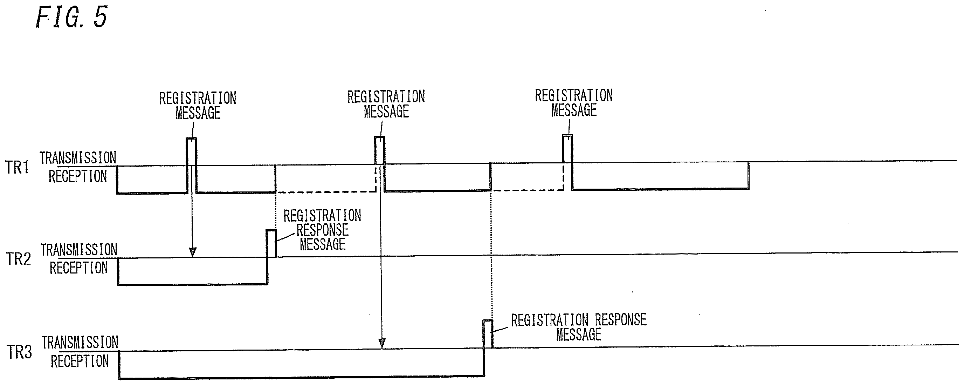

Thereupon, as shown in FIG. 5, the control unit 5 of the fire alarm device TR1 transmits in order from the wireless transmission and reception unit 2 wireless signals each including a registration message (simply called "registration messages" below) to the respective fire alarm devices **TR2**, **TR3** to which the slave numbers have been assigned. When the registration message is transmitted, the control unit 5 of the fire alarm device **TR1** activates the wireless transmission and reception unit 2 and waits for a prescribed time period for a reply from the fire alarm device **TR2**, **TR3** to which the registration message has been transmitted.

Here, the control unit 5 of the fire alarm device **TR1** transmits registration messages from the wireless transmission and reception unit 2 the fire alarm device **TR2** and the fire alarm device **TR3** in an ascending order of the slave number. Consequently, the control unit 5 of the fire alarm device **TR1** firstly transmits a registration message to the fire alarm device **TR2**, from the wireless transmission and reception unit 2. The registration message includes the registration information and the slave number of the fire alarm device **TR** as the destination.

When the registration message is received, the control unit 5 of the fire alarm device **TR2** stores the registration information and the slave number included in the registration message, in the memory. The control unit 5 of the fire alarm device **TR2** transmits a wireless signal including a registration response message which indicates that registration has been completed (simply called "registration response message" below), from the wireless transmission and reception unit 2 to the fire alarm device **TR1.** Thereupon, the control unit 5 of the fire alarm device **TR2** transfers to an asynchronous intermittent reception mode in which the wireless transmission and reception unit 2 is activated periodically. Since the intermittent reception mode is well-known, this mode is not described here.

Upon receiving the registration response message, the control unit 5 of the fire alarm device **TR1** subsequently transmits a registration message to the fire alarm device **TR3** from the wireless transmission and reception unit 2. When the registration message is received, the control unit 5 of the fire alarm device **TR3** stores the registration information and the slave number included in the registration message, in the memory. The control unit 5 of the fire alarm device **TR3** transmits a registration response message to the fire alarm device **TR1** from the wireless transmission and reception unit 2. Subsequently, the control unit 5 of the fire alarm device **TR3** transfers to an asynchronous intermittent reception mode.

When registration response messages have been received from all of the fire alarm devices **TR**, the control unit 5 of the fire alarm device **TR1** terminates the registration processing, and then transfers to an asynchronous intermittent reception mode after a lapse of a prescribed time period. In this case, the control unit 5 of the fire alarm device **TR1** causes the speaker of the notification unit 4 to emit a speech message stating "Device registered. This is the master. There are two slaves." Accordingly, the installer and/or user can confirm the fire alarm device as the master and the number of slaves that have been registered. The time taken for the registration processing depends on the number of fire alarm devices **TR** that are to be registered, but is from 5 to 20 seconds.

In the registration processing, a registration error may occur due to conflict between the response messages from the fire alarm devices **TR** which are to be registered. Therefore, the control unit 5 of the fire alarm device **TR1** is configured to repeat a series of operations involving: re-transmission of the registration start message, by broadcasting from the wireless transmission and reception unit 2 after the end of the reply waiting mode; and subsequently switching again to the reply waiting mode, multiple times (for example, three times). By re-transmitting the registration start message in this way, it is possible to raise the probability of receiving response messages from the fire alarm devices **TR** which are to be registered.

The present invention relates to a configuration in which the control unit 5 of the fire alarm device **TR1** measures the RSSI value of the wireless signal received in the reply waiting mode, and if the RSSI value is lower than a previously established threshold value, then re-transmission of the registration start message is stopped. With this configuration, it is possible to determine whether or not registration has been completed for all of the fire alarm devices **TR** that are to be registered. In other words, if the RSSI value is lower than the threshold value, then it is considered that a wireless signal corresponding to a response message has not been transmitted by any of the fire alarm devices **TR** that are to be registered. Consequently, with this configuration, it is possible to prevent the time taken for the registration processing from becoming unnecessarily long, since the registration start message is never re-transmitted unnecessarily.

Thereafter, for confirming whether or not the registration processing has been completed normally, what is need is to press the alarm stop button 60 of any of fire alarm devices **TR**, as shown in FIG. 2. For example, when the alarm stop button 60 of the fire alarm device **TR1** set as the master is pressed, then the control unit 5 of the fire alarm device **TR1** transmits a wireless signal including a test message prompting a reply (simply called "test message" below), by multicast from the wireless transmission and reception unit 2.

Upon receiving the test message, the control unit 5 of each of the fire alarm devices **TR2**, **TR3** set as the slaves transmits a response message to the fire alarm device **TR1** from the wireless transmission and reception unit 2. In this case, the control unit 5 of each fire alarm device **TR2**, **TR3** emits a speech message stating "normal" by the speaker of the notification unit 4.

When response messages from the fire alarm devices **TR2**, **TR3** are received, the control unit 5 of the fire alarm device **TR1** compares the identification codes of the fire alarm devices **TR** included in the response messages from the fire alarm devices **TR2**, **TR3**, with the identification codes of all of the fire alarm devices **TR** which are stored in the fire alarm device **TR1.** As a result of this comparison, the control unit 5 of the fire alarm device **TR1** confirms that there has been a reply from all of the fire alarm devices **TR**, and then terminates the test operation. In this case, the control unit 5 of the fire alarm device **TR1** emits a speech message stating "normal" by the speaker of the notification unit 4. This test operation can be carried out also after the fire alarm devices **TR** have been installed on the building surface. In this case also, the alarm stop button 60 of any of the fire alarm devices **TR** should be pressed in a similar fashion to that described above (see FIG. 2).

When the alarm stop button 60 of the fire alarm device **TR2** set as the slave is pressed, then the control unit 5 of the fire alarm device **TR2** transmits a test message from the wireless transmission and reception unit 2 to the fire alarm device **TR1** set as the master. Upon receiving the test message, the fire alarm device **TR1** carries out a test operation in a similar manner to that described above.

As described above, in the wireless communication system according to the present embodiment, it is possible to implement registration processing for setting the master and slaves, just by operating the alarm stop button 60 (registration switch) on any one of the fire alarm devices **TR**, one time. Therefore, in the wireless communication system according to the present embodiment, it is possible to simplify the work required for registration, compared to a case where the fire alarm devices **TR** are operated one by one, and furthermore, the time required for registration can be shortened.

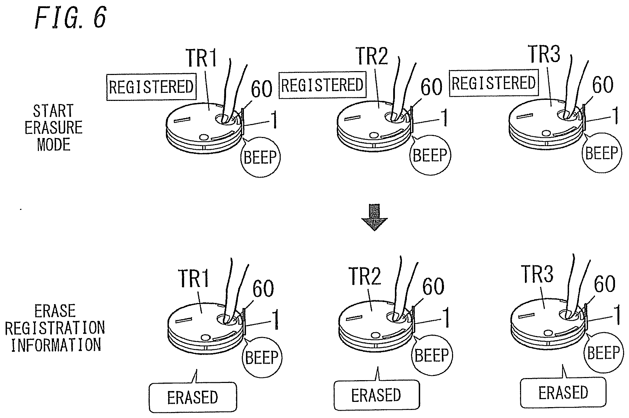

In cases where the installation location of the fire alarm device **TR** is changed or where a new fire alarm device **TR** is added to the alarm system, for example, it is necessary to erase registration information of the fire alarm devices **TR** and implement registration anew. Below, the re-registration processing of the fire alarm devices **TR** in the wireless communication system according to the present embodiment will be described with reference to FIG. 6.

Firstly, the power supplies to the fire alarm devices **TR1** to **TR3** are switched off. Thereupon, the power supply to the fire alarm device **TR1** is switched on, while depressing and holding the alarm stop button 60 of the fire alarm device **TR1.** Accordingly, the control unit 5 of the fire alarm device **TR1** switches to an erasure mode for erasing the registration information. In this case, the control unit 5 of the fire alarm device **TR1** emits a "beep" alarm sound by the buzzer of the notification unit 4. By following a similar procedure in respect of the fire alarm devices **TR2** and **TR3** as well, the control units 5 of the fire alarm devices **TR2**, **TR3** are switched to an erasure mode.

Next, the alarm stop button 60 of the fire alarm device **TR1** is depressed and held within a prescribed time period (for example, several seconds) after switching on the power supply. Accordingly, the control unit 5 of the fire alarm device **TR1** erases the registration information which is stored in the memory. In this case, the control unit 5 of the fire alarm device **TR1** causes the buzzer of the notification unit 4 to issue a "beep" alarm sound, and also causes the speaker of the notification unit 4 to emit a speech message stating "erased". By following a similar procedure in respect of the fire alarm devices **TR2** and **TR3** as well, the registration information is erased by the control units 5 of each fire alarm device **TR2**, **TR3.**

After switching off the power supply, by again executing the registration processing that has already been described above, it is possible to register each fire alarm device **TR1** to **TR3** as either the master or the slave again. Furthermore, if a new fire alarm device **TR** is added as the slave, for example, then by carrying out the registration processing that has already been described, including the new fire alarm device **TR**, it is possible to register the fire alarm devices including the new fire alarm device **TR.**

If the alarm stop button 60 of a new fire alarm device **TR** is pressed mistakenly before the re-registration processing is carried out, the control unit 5 of the new fire alarm device **TR** sets the new fire alarm device **TR** as the master. Hence, there is a concern that two masters may exist. In view of this, it is preferable that the control unit 5 of the fire alarm device **TR** set as the master is configured to, when failing to receive the response message before a predetermined period elapses from time of transmitting a registration start message, cancel setting as the master. With this configuration, even when a new fire alarm device **TR** is set as the master, the setting as the master is automatically cancelled due to no reply of the response message from another fire alarm device **TR**, and thus it is possible to prevent the situation of existing two masters.

In the re-registration processing described above, when a new fire alarm device **TR** is added, it is necessary to operate each of the fire alarm devices **TR** individually, in order to erase the registration information of all of the fire alarm devices **TR**, and there is a concern that this will be burdensome. Therefore, one-to-one registration processing may be carried out between any of the fire alarm devices **TR**, for which registration has already been implemented, and a newly added fire alarm device **TR**, and then additional registration processing may be carried out to transmit updated registration information to all of the fire alarm devices **TR** belonging to the same group after the registration processing. In this case, since there is no need to erase the registration information of all of the fire alarm devices **TR**, then it is possible to omit the tasks required for additional registration.

However, it is necessary to additionally store a program for carrying out the abovementioned additional registration processing in the memory of each of the fire alarm devices **TR**, which requires a large-capacity memory, and thus there is a concern that it will be impossible to make the fire alarm devices **TR** compact in size and low in cost. Therefore, it should be decided whether or not to use a program for carrying out the additional registration processing, as appropriate, by taking account of the convenience for the operator and/or the user.

The wireless stations of the wireless communication system according to the present embodiment are not limited to the fire alarm devices **TR** described above. For example, the wireless communication system of the present embodiment may be constructed by using wireless stations other than the fire alarm devices **TR.**

For example, it is also possible to construct the wireless communication system according to the present embodiment by using a wireless station having an air quality sensor configured to measure the so-called air quality, such as the humidity in the air. A gas sensor is one example of the air quality sensor. A gas sensor measures the gas content of fuel gas, such as town gas, LP gas, or the like, or the COx gas content which is an environmental indicator, such as carbon dioxide and/or carbon monoxide, or dirt, such as dust, which is floating in the air, etc. A gas alarm configured to report the occurrence of a gas leak and/or incomplete combustion, by an alarm sound, is an example of a wireless station which includes this gas sensor.

Furthermore, the wireless communication system according to the present embodiment may also be constructed by using a wireless station which has a human sensor configured to detect the presence of a human. The human sensor may employ a system which detects the presence of a human by detecting infrared radiation emitted from a human or a system which detects the presence of a human by image processing analysis of an image captured of a target region. Alternatively, both of the abovementioned systems may be used in combination in a human sensor.

Furthermore, a wireless station having this air quality sensor and/or a wireless station having a human sensor may be combined with a wireless fire alarm device **TR** described above to construct a wireless communication system. In this case, it is possible to construct a wireless communication system which combines the objects of detecting people and/or issuing ventilation warnings, in addition to detecting fires.

## Claims

1. A wireless communication system comprising multiple wireless stations, each of the multiple wireless stations having a mutually different identification code, any one of the multiple wireless stations operating as a master, each of the others of the multiple wireless stations operating as a slave, the master and the slave being configured to transmit and receive wireless signals there between by use of radio waves as a medium, the wireless station comprising:
a wireless transmission and reception unit (2), a control unit (5) and a registration switch (60),
the wireless transmission and reception unit (2) being configured to transmit and receive the wireless signals,
the control unit (5) being configured to carry out registration processing for registering each of the multiple wireless stations as either the master or the slave,
the registration switch (60) being configured to, in response to reception of a manual operation input cause the control unit (5) to carry out the registration processing, by causing
the control unit (5) to:
set the wireless station comprising this control unit as the master and transmit a registration start message prompting registration as slaves to the others of the multiple wireless stations, through the wireless transmission and reception unit, and
upon receiving response messages transmitted from the others of the multiple wireless stations, store the respective identification codes of all of the wireless stations which have transmitted the response messages, wherein:
any one of the multiple wireless stations is configured to operate as a first wireless station configured to carry out the registration processing, each of the others of the multiple wireless stations is configured to operate as a second wireless station,
the control unit (5) of each of the multiple second wireless stations being configured to, upon receiving the registration start message, set a second wireless station comprising this control unit (5) as the slave and transmit a response message including the identification code of the second wireless station comprising this control unit to the first wireless station, through the wireless transmission and reception unit of the second wireless station,
wherein the control unit of the first wireless station is configured to re-transmit the registration start message through the wireless transmission and reception unit (2) of the first wireless station, after a prescribed interval, and
wherein the control unit (5) of the first wireless station is configured to measure received signal strength of the wireless signals received in a reception time period of waiting for transmission of the response messages, and stop the re-transmission of the registration start message if the received signal strength is lower than a pre-established threshold value.

2. The wireless communication system according to claim 1, wherein:
the control unit (5) of the first wireless station is configured to, in the registration processing, store registration information including the respective identification codes of all of second wireless stations which have transmitted the response messages and the identification code of the first wireless station comprising this control unit (5), and then assign slave numbers to the second wireless stations individually, and transmit registration messages each including the registration information and the slave number of the second wireless station as a destination, to the second wireless stations through the wireless transmission and reception unit of the first wireless station;
the control unit (5) of each of the multiple second wireless stations is configured to, upon receiving the registration message, store the registration information and the slave number, and transmit a registration response message which indicates that registration has been completed, to the first wireless station through the wireless transmission and reception unit of the second wireless station; and
the control unit of the first wireless station is configured to, upon receiving the registration response messages from all of the second wireless stations which have transmitted the response messages, finish the registration processing.

3. The wireless communication system according to claim 1, wherein the control unit (5) of each of the multiple second wireless stations is configured to, upon receiving the registration start message, transmit the response message to the first wireless station after a lapse of a waiting time which is determined based on the identification code of the second wireless station comprising this control unit, through the wireless transmission and reception unit (2) of the second wireless station.

4. The wireless communication system according to claim 1, wherein:
each of the multiple wireless stations has a timer configured to count an elapsed time since switching on of a power supply to the wireless station; and
the control unit (5) of each of the multiple second wireless stations is configured to, upon receiving the registration start message, transmit the response message to the first wireless station after a lapse of a waiting time which is determined based on the elapsed time counted by the timer of the second wireless station, through the wireless transmission and reception unit of the second wireless station.

5. The wireless communication system according to claim 1, wherein the control unit (5) of each of the multiple second wireless stations is configured to transmit the response message to the first wireless station through the wireless transmission and reception unit (2) of the second wireless station, after detecting that there are no conflicting radio waves by a carrier sense function.

6. The wireless communication system according to claim 1, wherein:
the control unit (5) of the first wireless station is configured to divide a time period of waiting for transmission of the response messages into multiple time slots; and
the control unit (5) of each of the multiple second wireless stations is configured to transmit the response message to the first wireless station by using any of the multiple time slots, through the wireless transmission and reception unit of the second wireless station.

7. The wireless communication system according to claim 1, wherein:
each of the multiple wireless stations has a notification unit (4) configured to report occurrence of an event by speech; and
the control unit (5) of the first wireless station is configured to, upon completing the registration processing, cause the notification unit of the first wireless station to report that the first wireless station comprising this control unit (5) is set as the master, by speech.

8. The wireless communication system according to claim 1, wherein the control unit (5) of the first wireless station is configured to, when failing to receive the response message before a predetermined time elapses from time of transmitting the registration start message, cancel the setting as the master of this first wireless station.

9. The wireless communication system according to claim 1, wherein each of the multiple wireless stations is at least one of: a fire alarm device configured to detect occurrence of a fire; a wireless station having an air quality sensor configured to measure air quality; and a wireless station having a human sensor configured to detect presence of a human.

## Patentansprüche

1. Drahtloses Kommunikationssystem, das mehrere Drahtlosstationen aufweist, wobei jede der mehreren Drahtlosstationen einen voneinander unterschiedlichen Identifikationscode hat, eine beliebige der mehreren Drahtlosstationen als ein Master arbeitet, jede der anderen der mehreren Drahtlosstationen als ein Slave arbeitet, der Master und der Slave konfiguriert sind, um zwischen ihnen unter Verwendung von Funkwellen als ein Medium drahtlose Signale zu senden und zu empfangen, wobei die Drahtlosstation aufweist:
eine drahtlose Sende- und Empfangseinheit (2), eine Steuereinheit (5) und einen Registrierungsschalter (60),
wobei die drahtlose Sende- und Empfangseinheit (2) konfiguriert ist, um die drahtlosen Signale zu senden und zu empfangen,
wobei die Steuereinheit (5) konfiguriert ist, um eine Registrierungsverarbeitung durchzuführen, um jede der mehreren Drahtlosstationen entweder als Master oder als Slave zu registrieren,
wobei der Registrierungsschalter (60) konfiguriert ist, um als Reaktion auf den Empfang einer manuellen Bedienungseingabe die Steuereinheit (5) zur Durchführung der Registrierungsverarbeitung zu veranlassen, indem die Steuereinheit dazu veranlasst wird:
die Drahtlosstation, die diese Steuereinheit (5) aufweist, als den Master einzustellen und an die anderen der mehreren Drahtlosstationen über die drahtlose Sende- und Empfangseinheit eine Registrierungsstartnachricht zu senden, die zur Registrierung als Slaves auffordert,
und
bei einem Empfang von Antwortnachrichten, die von den anderen der mehreren Drahtlosstationen gesendet wurden, die jeweiligen Identifikationscodes sämtlicher Drahtlosstationen zu speichern, die die Antwortnachrichten gesendet haben, wobei:
eine beliebige der mehreren Drahtlosstationen konfiguriert ist, um als eine erste Drahtlosstation zu arbeiten, die konfiguriert ist, um die Registrierungsverarbeitung auszuführen, wobei jede der anderen der mehreren Drahtlosstationen konfiguriert ist, um als eine zweite Drahtlosstation zu arbeiten,
die Steuereinheit (5) jeder der mehreren zweiten Drahtlosstationen konfiguriert ist, um beim Empfang der Registrierungsstartnachricht eine zweite Drahtlosstation, die diese Steuereinheit (5) aufweist, als den Slave einzustellen und eine Antwortnachricht, die den Identifikationscode der zweiten Drahtlosstation enthält, die diese Steuereinheit aufweist, über die drahtlose Sende- und Empfangseinheit der zweiten Drahtlosstation an die erste Drahtlosstation zu senden,
wobei die Steuereinheit der ersten Drahtlosstation konfiguriert ist, um die Registrierungsstartnachricht über die drahtlose Sende- und Empfangseinheit (2) der ersten Drahtlosstation nach einem vorgeschriebenen Intervall erneut zu senden, und
wobei die Steuereinheit (5) der ersten Drahtlosstation konfiguriert ist, um die empfangene Signalstärke der drahtlosen Signale, die in einer Empfangszeitperiode des Wartens auf eine Sendung der Antwortnachrichten empfangen werden, zu messen und die erneute Sendung der Registrierungsstartnachricht anzuhalten, wenn die empfangene Signalstärke niedriger als ein vorher festgelegter Schwellenwert ist.

2. Drahtloses Kommunikationssystem nach Anspruch 1, wobei:
die Steuereinheit (5) der ersten Drahtlosstation konfiguriert ist, um bei der Registrierungsverarbeitung Registrierungsinformationen, die die jeweiligen Identifikationscodes sämtlicher zweiten Drahtlosstationen, die die Antwortnachrichten gesendet haben, und den Identifikationscode der ersten Drahtlosstation, die diese Steuereinheit (5) aufweist, enthalten, zu speichern und dann den zweiten Drahtlosstationen individuell Slave-Nummern zuzuweisen und Registrierungsnachrichten, die jeweils die Registrierungsinformationen und die Slave-Nummer der zweiten Drahtlosstation als ein Ziel enthalten, über die drahtlose Sende- und Empfangseinheit der ersten Drahtlosstation an die zweiten Drahtlosstationen zu senden;
die Steuereinheit (5) jeder der mehreren zweiten Drahtlosstationen konfiguriert ist, um beim Empfang der Registrierungsnachricht die Registrierungsinformationen und die Slave-Nummer zu speichern und eine Registrierungsantwortnachricht, die angibt, dass die Registrierung abgeschlossen ist, über die drahtlose Sende- und Empfangseinheit der zweiten Drahtlosstation an die erste Drahtlosstation zu senden; und
die Steuereinheit der ersten Drahtlosstation konfiguriert ist, um beim Empfang der Registrierungsantwortnachrichten von sämtlichen zweiten Drahtlosstationen, die die Antwortnachrichten gesendet haben, die Registrierungsverarbeitung zu beenden.

3. Drahtloses Kommunikationssystem nach Anspruch 1, wobei die Steuereinheit (5) jeder der mehreren zweiten Drahtlosstationen konfiguriert ist, um beim Empfang der Registrierungsstartnachricht die Antwortnachricht nach einem Verstreichen einer Wartezeit, die auf der Grundlage des Identifikationscodes der zweiten Drahtlosstation, die diese Steuereinheit aufweist, bestimmt wird, über die drahtlose Sende- und Empfangseinheit (2) der zweiten Drahtlosstation an die erste Drahtlosstation zu senden.

4. Drahtloses Kommunikationssystem nach Anspruch 1, wobei:
jede der mehreren Drahtlosstationen einen Zeitgeber aufweist, der konfiguriert ist, um eine seit dem Einschalten einer Stromversorgung für die Drahtlosstation verstrichene Zeit zu zählen; und
die Steuereinheit (5) jeder der mehreren zweiten Drahtlosstationen konfiguriert ist, um beim Empfang der Registrierungsstartnachricht die Antwortnachricht nach dem Verstreichen einer Wartezeit, die auf der Grundlage der verstrichenen Zeit bestimmt wird, die von dem Zeitgeber der zweiten Drahtlosstation gezählt wurde, über die drahtlose Sende- und Empfangseinheit der zweiten Drahtlosstation an die erste Drahtlosstation zu senden.

5. Drahtloses Kommunikationssystem nach Anspruch 1, wobei die Steuereinheit (5) jeder der mehreren zweiten Drahtlosstationen konfiguriert ist, um die Antwortnachricht an die erste Drahtlosstation über die drahtlose Sende- und Empfangseinheit (2) der zweiten Drahtlosstation zu senden, nachdem durch eine Trägerwellenerfassungsfunktion erkannt ist, dass keine störenden Funkwellen vorhanden sind.

6. Drahtloses Kommunikationssystem nach Anspruch 1, wobei:
die Steuereinheit (5) der ersten Drahtlosstation konfiguriert ist, um eine Zeitperiode des Wartens auf eine Sendung der Antwortnachrichten in mehrere Zeitschlitze zu unterteilen; und
die Steuereinheit (5) jeder der mehreren zweiten Drahtlosstationen konfiguriert ist, um die Antwortnachricht unter Verwendung eines der mehreren Zeitschlitze über die drahtlose Sende- und Empfangseinheit der zweiten Drahtlosstation an die erste Drahtlosstation zu senden.

7. Drahtloses Kommunikationssystem nach Anspruch 1, wobei:
jede der mehreren Drahtlosstationen eine Benachrichtigungseinheit (4) hat, die konfiguriert ist, um ein Auftreten eines Ereignisses mittels Sprache zu melden; und
die Steuereinheit (5) der ersten Drahtlosstation konfiguriert ist, um nach Abschluss der Registrierungsverarbeitung die Benachrichtigungseinheit der ersten Drahtlosstation dazu zu veranlassen, mittels Sprache zu melden, dass die erste Drahtlosstation, die diese Steuereinheit (5) aufweist, als Master eingestellt ist.

8. Drahtloses Kommunikationssystem nach Anspruch 1, wobei die Steuereinheit (5) der ersten Drahtlosstation konfiguriert ist, um, wenn die Antwortnachricht nicht empfangen wird, bevor eine vorbestimmte Zeit ab dem Zeitpunkt des Sendens der Registrierungsstartnachricht verstrichen ist, die Einstellung dieser ersten Drahtlosstation als Master aufzuheben.

9. Drahtloses Kommunikationssystem nach Anspruch 1, wobei jede der mehreren Drahtlosstationen mindestens eines von Folgendem ist: eine Feueralarmvorrichtung, die konfiguriert ist, um ein Auftreten von Feuer zu erkennen; eine Drahtlosstation mit einem Luftqualitätssensor, der konfiguriert ist, um die Luftqualität zu messen; und eine Drahtlosstation mit einem Menscherfassungsensor, der konfiguriert ist, um die Anwesenheit eines Menschen zu erkennen.

## Revendications

1. Système de communication sans fil comprenant des stations sans fil multiples, chacune des stations sans fil multiples ayant des codes d'identification mutuellement différents, l'une quelconque des stations sans fil multiples fonctionnant en tant que maître, chacune des autres stations sans fil multiples fonctionnant en tant qu'esclave, le maître et l'esclave étant configurés pour émettre et recevoir des signaux sans fil entre ceux-ci au moyen d'ondes radio en tant que support, la station sans fil comprenant :
une unité d'émission et de réception sans fil (2), une unité de commande (5) et un commutateur d'enregistrement (60),
l'unité d'émission et de réception sans fil (2) étant configurée pour émettre et recevoir les signaux sans fil,
l'unité de commande (5) étant configurée pour conduire un traitement d'enregistrement pour enregistrer chacune des stations sans fil multiples en tant que maître ou esclave,
le commutateur d'enregistrement (60) étant configuré pour, en réponse à la réception d'une entrée d'opération manuelle, amener l'unité de commande (5) à conduire le traitement d'enregistrement, en amenant l'unité de commande (5) à :
définir la station sans fil comprenant cette unité de commande en tant que maître et transmettre un message de début d'enregistrement invitant à l'enregistrement en tant qu'esclaves aux autres stations sans fil multiples, par l'intermédiaire de l'unité d'émission et de réception sans fil, et
lors de la réception de messages de réponse transmis depuis les autres stations sans fil multiples, stocker les codes d'identification respectifs de toutes les stations sans fil qui ont transmis les messages de réponse, dans lequel :
l'une quelconque des stations sans fil multiples est configurée pour fonctionner en tant que première station sans fil configurée pour conduire le traitement d'enregistrement, chacune des autres stations sans fil multiples étant configurée pour fonctionner en tant que deuxième station sans fil,
l'unité de commande (5) de chacune des deuxièmes stations sans fil multiples étant configurée pour, lors de la réception du message de début d'enregistrement, définir une deuxième station sans fil comprenant cette unité de commande (5) en tant qu'esclave et transmettre un message de réponse comprenant le code d'identification de la deuxième station sans fil comprenant cette unité de commande à la première station sans fil, par l'intermédiaire de l'unité d'émission et de réception sans fil de la deuxième station sans fil,
dans lequel l'unité de commande de la première station sans fil est configurée pour retransmettre le message de début d'enregistrement par l'intermédiaire de l'unité d'émission et de réception sans fil (2) de la première station sans fil, après un intervalle prescrit, et
dans lequel l'unité de commande (5) de la première station sans fil est configurée pour mesurer une intensité de signal reçue des signaux sans fil reçus dans une période de réception d'attente de transmission des messages de réponse, et arrêter la retransmission du message de début d'enregistrement si l'intensité du signal reçu est inférieure à une valeur de seuil prédéfinie.

2. Système de communication sans fil selon la revendication 1, dans lequel :
l'unité de commande (5) de la première station sans fil est configurée pour, dans le traitement d'enregistrement, stocker des informations d'enregistrement comprenant les codes d'identification respectifs de l'ensemble des deuxièmes stations sans fil qui ont transmis les messages de réponse et le code d'identification de la première station sans fil comprenant cette unité de commande (5), puis attribuer des numéros d'esclave aux deuxièmes stations sans fil individuellement, et transmettre des messages d'enregistrement comprenant chacun les informations d'enregistrement et le numéro d'esclave de la deuxième station sans fil en tant que destination, aux deuxièmes stations sans fil par l'intermédiaire de l'unité d'émission et de réception sans fil de la première station sans fil ;
l'unité de commande (5) de chacune des deuxièmes stations sans fil multiples est configurée pour, lors de la réception du message d'enregistrement, stocker les informations d'enregistrement et le numéro d'esclave, et transmettre un message de réponse d'enregistrement qui indique que l'enregistrement est terminé, à la première station sans fil par l'intermédiaire de l'unité d'émission et de réception sans fil de la deuxième station sans fil ; et
l'unité de commande de la première station sans fil est configurée pour, lors de la réception des messages de réponse d'enregistrement depuis l'ensemble des deuxièmes stations sans fil qui ont transmis les messages de réponse, terminer le traitement d'enregistrement.

3. Système de communication sans fil selon la revendication 1, dans lequel l'unité de commande (5) de chacune des deuxièmes stations sans fil multiples est configurée pour, lors de la réception du message de début d'enregistrement, transmettre le message de réponse à la première station sans fil après un laps de temps d'attente qui est déterminé sur la base du code d'identification de la deuxième station sans fil comprenant cette unité de commande, par l'intermédiaire de l'unité d'émission et de réception sans fil (2) de la deuxième station sans fil.

4. Système de communication sans fil selon la revendication 1, dans lequel :
chacune des stations sans fil multiples comporte un minuteur configuré pour compter un temps écoulé depuis l'activation d'une alimentation électrique pour la station sans fil ; et
l'unité de commande (5) de chacune des deuxièmes stations sans fil multiples est configurée pour, lors de la réception du message de début d'enregistrement, transmettre le message de réponse à la première station sans fil après un laps de temps d'attente qui est déterminé sur la base du temps écoulé compté par le minuteur de la deuxième station sans fil, par l'intermédiaire de l'unité d'émission et de réception sans fil de la deuxième station sans fil.

5. Système de communication sans fil selon la revendication 1, dans lequel l'unité de commande (5) de chacune des deuxièmes stations sans fil multiples est configurée pour transmettre le message de réponse à la première station sans fil par l'intermédiaire de l'unité d'émission et de réception sans fil (2) de la deuxième station sans fil, après la détection du fait qu'il n'y a pas d'ondes radio conflictuelles par une fonction de détection de porteuse.

6. Système de communication sans fil selon la revendication 1, dans lequel :
l'unité de commande (5) de la première station sans fil est configurée pour diviser une période d'attente de transmission des messages de réponse en intervalles de temps multiples ; et
l'unité de commande (5) de chacune des deuxièmes stations sans fil multiples est configurée pour transmettre le message de réponse à la première station sans fil en utilisant l'un quelconque des intervalles de temps multiples, par l'intermédiaire de l'unité d'émission et de réception sans fil de la deuxième station sans fil.

7. Système de communication sans fil selon la revendication 1, dans lequel :
chacune des stations sans fil multiples comporte une unité de notification (4) configurée pour rapporter la survenue d'un événement par la parole ; et
l'unité de commande (5) de la première station sans fil est configurée pour, lors de l'achèvement du traitement d'enregistrement, amener l'unité de notification de la première station sans fil à rapporter que la première station sans fil comprenant cette unité de commande (5) est définie en tant que maître, par la parole.

8. Système de communication sans fil selon la revendication 1, dans lequel l'unité de commande (5) de la première station sans fil est configurée pour, en cas d'absence de réception du message de réponse avant qu'un temps prédéterminé soit écoulé à compter du temps de transmission du message de début d'enregistrement, annuler la définition en tant que maître de cette première station sans fil.

9. Système de communication sans fil selon la revendication 1, dans lequel chacune des stations sans fil multiples est au moins l'un parmi : un dispositif d'alarme d'incendie configuré pour détecter la survenue d'un incendie ; une station sans fil comportant un capteur de qualité de l'air configuré pour mesurer la qualité de l'air ; et une station sans fil comportant un capteur d'humain configuré pour détecter la présence d'un humain.
